(19) **Europäisches Patentamt / European Patent Office / Office européen des brevets**

(11) **EP 2 179 637 B1**

(12) **EUROPÄISCHE PATENTSCHRIFT**

(45) Veröffentlichungstag und Bekanntmachung des Hinweises auf die Patenterteilung:
**30.11.2011 Patentblatt 2011/48**

(51) Int Cl.:
*A01C 3/06* *(2006.01)*     *A01C 15/16* *(2006.01)*
*A01C 17/00* *(2006.01)*

(21) Anmeldenummer: **09160149.2**

(22) Anmeldetag: **13.05.2009**

(54) **Fahrzeug mit Austragseinrichtung**

Vehicle with discharging device

Véhicule avec dispositif de déchargement

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **22.10.2008 DE 202008014060 U**

(43) Veröffentlichungstag der Anmeldung:
**28.04.2010 Patentblatt 2010/17**

(73) Patentinhaber: **Fliegl, Josef**
**84513 Töging (DE)**

(72) Erfinder: **Fliegl, Josef**
**84513 Töging (DE)**

(74) Vertreter: **Tetzner, Michael et al**
**Van-Gogh-Strasse 3**
**81479 München (DE)**

(56) Entgegenhaltungen:
**DE-A1- 3 912 848     DE-A1- 10 215 031**
**DE-A1- 10 238 395     US-A1- 2003 226 916**

**Beschreibung**

Die Erfindung betrifft ein Fahrzeug mit einem Laderaum zum Aufnehmen von Ladegut, einer im Laderaum angeordneten Austragseinrichtung zum Fördern des Ladeguts zu einer Austragsöffnung und einer im Bereich der Austragsöffnung angeordneten Verteilereinrichtung zum flächigen Verteilen des Ladeguts.

Bei dem Fahrzeug handelt es sich beispielsweise um einen landwirtschaftlichen Anhänger, insbesondere um einen Miststreuwagen, der im Laderaum eine Schiebewand aufweist, die das Ladegut in Richtung der heckseitig angeordneten Austragsöffnung schiebt. Im Bereich der Austragsöffnung sind beispielsweise Streuwalzen angeordnet, die das Ladegut flächig ausbringen. Die Streuwalzen werden üblicherweise über die Zapfwelle eines Traktors mit einer bestimmten Geschwindigkeit angetrieben. Der Vorschub der Schiebewand muss so eingestellt werden, dass das Ladegut den Streuwalzen in ausreichender Menge zugeführt wird, andererseits aber vermieden, dass das Ladegut zwischen Schiebewand und Streuwalzen gepresst wird. Die Schiebewand wird üblicherweise hydraulisch verstellt, wobei durch Regulierung des Ölflusses der Vorschub eingestellt werden kann. Für einen gleichmäßigen Austrag des Ladeguts ist es nötig, dass das Zugfahrzeug mit möglichst gleichmäßiger Geschwindigkeit bewegt wird. Dennoch ist es in der Praxis immer wieder erforderlich, dass der Vorschub der Schiebewand nachjustiert werden muss.

Aus der DE 39 12 848 A1 ist ferner ein Streufahrzeug bekannt, bei dem eine am Behälterboden vorgesehene Austragseinrichtung in Abhängigkeit des Drehmoments einer Verteilereinrichtung geregelt wird, wobei das Drehmoment indirekt über den Druck eines die Verteilereinrichtung antreibenden Hydromotors gemessen wird.

Der Erfindung liegt die Aufgabe zugrunde, eine automatische Regelung für den Vorschub einer Schiebewand zu schaffen.

Erfindungsgemäß wird diese Aufgabe durch die Merkmale des Anspruches 1 gelöst.

Das erfindungsgemäße Fahrzeug besteht im Wesentlichen aus einem Laderaum zum Aufnehmen von Ladegut, einer im Laderaum angeordneten Austragseinrichtung zum Fördern des Ladeguts zu einer Austragsöffnung, wobei Mittel vorgesehen sind, um den Vorschub der Austragsöffnung zu regeln, und einer im Bereich der Austragsöffnung angeordneten Verteilereinrichtung zum flächigen Verteilen des Ladeguts, wobei die Verteilereinrichtung über ein Antriebselement angetrieben wird. Weiterhin sind eine elektronische Torsionsmesseinrichtung zur Erfassung der Torsion des Antriebselements und eine Drehzahlmesseinrichtung zur Ermittlung der Drehzahl des Antriebselements sowie eine Steuereinrichtung zur Regelung des Vorschubs der Austragseinrichtung in Abhängigkeit der Torsion und der Drehzahl des Antriebselementes vorgesehen.

Bei dem Antriebselement für die Verteilereinrichtung handelt es sich üblicherweise um eine drehende Welle, die beispielsweise über die Zapfwelle des Zugfahrzeuges angetrieben wird. Wird das Ladegut durch die Schiebewand übermäßig stark gegen die Verteilereinrichtung gedrückt, kommt es zu einer Torsion des Antriebselementes. Bei den der Erfindung zugrunde liegenden Versuchen hat sich gezeigt, dass es bei einer optimalen Beschickung der Verteilerwalzen mit dem Ladegut bereits zu einer geringfügigen Torsion kommt. Anhand der Torsionsmessung lässt sich somit feststellen, ob der Verteilereinrichtung die optimale Ladegutmenge zugeführt wird. Wird bei der Torsionsmessung eine größer werdende Torsion festgestellt, wird über die Steuereinrichtung der Vorschub der Austragseinrichtung entsprechend reduziert. In entsprechender Weise wird der Vorschub erhöht, wenn keine Torsion mehr festgestellt wird.

Durch diese Steuerung wird der Verteilereinrichtung immer genau die Menge an Ladegut zugeführt, die eine möglichst gleichmäßige, flächige Verteilung des Ladeguts gewährleistet.

Bei heutigen Zugmaschinen ist es möglich, die Zapfwellengeschwindigkeit, welche das Antriebselement der Verteilereinrichtung antreibt, durch ein Schaltgetriebe zu verändern. Bei gleichbleibender Antriebsleistung ändert sich mit der Änderung der Drehzahl aber das Drehmoment. Nachdem neben der Torsionsmessung auch die Drehzahl des Antriebselementes erfasst wird, lässt sich somit eine übersetzungsunabhängige Regelung realisieren.

Die Torsionsmesseinrichtung kann beispielsweise durch wenigstens einen elektronischen, berührungsfreien Sensor, einen magnetischen Sensor oder einen Lichtsensor gebildet werden.

Bei der Austragseinrichtung handelt es sich beispielsweise um eine Schiebewand oder einen Kratzboden. Für die Verteilereinrichtung kommen insbesondere Streuwalzen, Fräswalzen oder ein Streuteller in Betracht.

Zur Regelung des Vorschubs der Austragseinrichtung wird vorzugsweise ein Hydraulikventil eingesetzt, dessen Ölfluss über die Steuereinrichtung geregelt wird.

Gemäß einer bevorzugten Ausgestaltung der Erfindung ist die Torsionsmesseinrichtung gleichzeitig zur Erfassung der Drehzahl ausgebildet, sodass kein zusätzlicher Sensor oder Schalter erforderlich ist.

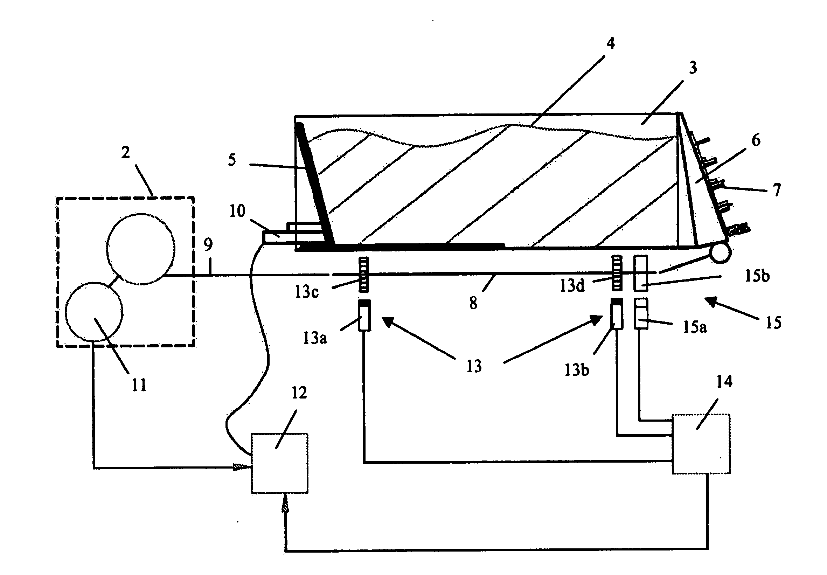

Weitere Ausgestaltungen der Erfindung sind Gegenstand der Unteransprüche und werden im Folgenden anhand der Beschreibung und der Zeichnung näher erläutert.

Die Zeichnung zeigt eine schematische Darstellung des erfindungsgemäßen Fahrzeugs mit einer Steuereinrichtung zur Regelung des Vorschubs der Austragseinrichtung.

Bei dem in der Zeichnung dargestellten Fahrzeug handelt es sich insbesondere um einen landwirtschaftlichen Anhänger 1, der an ein Zugfahrzeug 2, beispielsweise einen Traktor, angehängt wird. Der Anhänger 1 besteht im Wesentlichen aus einem Laderaum 3 zum Aufnehmen von Ladegut 4, einer im Laderaum angeordneten Austragseinrichtung 5 zum Fördern des Ladeguts 4, zu einer Austragsöffnung 6 sowie einer im Bereich der Austragsöffnung angeordneten Verteilereinrichtung 7 zum flächigen Verteilen des Ladeguts auf ein Feld oder einen Acker.

Die Verteilereinrichtung 7 wird beispielsweise durch Streuwalzen, Fräswalzen oder einen Streuteller gebildet und durch ein Antriebselement 8 angetrieben. Der Antrieb des Antriebselements 8 erfolgt über eine Zapfwelle 9 des Zugfahrzeuges.

Die Austragseinrichtung 5 kann beispielsweise durch einen Kratzboden oder, wie im dargestellten Ausführungsbeispiel, durch eine Schiebewand gebildet werden. Die Schiebewand 5 kann dabei wahlweise auch noch mit einem Schiebeboden kombiniert werden.

Der Vorschub der Austragseinrichtung 5 wird beispielsweise über Hydraulikzylinder 10 realisiert, wobei der von einer Ölpumpe des Zugfahrzeuges 2 kommende Ölfluss über ein Hydraulikventil 12 geregelt wird.

Das Antriebselement 8 ist weiterhin mit einer elektronischen Torsionsmesseinrichtung 13 ausgestattet, um die Torsion des Antriebselementes zu erfassen.

Im dargestellten Ausführungsbeispiel weist die Torsionsmesseinrichtung zwei Sensoren bzw. Schalter 13a, 13b auf, die voneinander beabstandet sind und jeweils mit einem geschlitzten Wellenbereich oder Zahnrad 13c, 13d am Antriebselement 8 zusammenwirken. Die Sensoren 13a, 13b erfassen die Impulse der geschlitzten Wellenbereiche/Zahnräder 13c, 13d. In einer Steuereinrichtung 14 werden die Messsignale der Sensoren 13a und 13b verarbeitet. Die geschlitzten Wellenbereiche bzw. Zahnräder 13c, 13d sind auf der Welle so ausgerichtet, dass im Leerlauf des Antriebselementes 8, wenn keine Torsion auftritt, zwei zeitgleiche Impulse von den Sensoren 13a, 13b erfasst werden. Sind die beiden Impulse verschoben kann in der Steuereinrichtung 14 die Zeitdifferenz und damit der Wert der Torsion berechnet werden. Eine zu starke Torsion wird durch einen zu großen momentanen Vorschub der Austragseinrichtung 5 bedingt. Entsprechend wird die Steuereinrichtung 14 das Hydraulikventil 12 etwas drosseln, um den Vorschub der Schiebewand 5 zu verlangsamen. Wird keine Torsion festgestellt, wird das Hydraulikventil 12 etwas weiter geöffnet, um den Vorschub der Austragseinrichtung 5 zu erhöhen. Durch die Torsionsmesseinrichtung 13 kann der Vorschub der Austragseinrichtung automatisch geregelt werden, sodass immer eine optimale Menge des Ladegutes 4 der Verteilereinrichtung 7 zugeführt wird.

Bei heutigen Zugfahrzeugen kann die Geschwindigkeit der Zapfwelle 9 durch ein Schaltgetriebe verändert werden. Bei gleich bleibender Antriebsleistung ändert sich durch eine veränderte Drehzahl auch das Drehmoment bzw. die Torsion des Antriebselementes 8, wobei folgender Zusammenhang besteht:

$$P = M_d * \omega$$

P = Leistung (kW)
$M_d$ = Drehmoment (Nm)
$\omega$ = Drehzahl (rad/s)

Bei einer Veränderung der Drehzahl müsste daher auch die Steuereinrichtung bezüglich des Drehmomentes angepasst werden. Im dargestellten Ausführungsbeispiel ist zu diesem Zweck eine Drehzahlmesseinrichtung 15 zur Ermittlung der Drehzahl des Antriebselementes 8 vorgesehen, wobei die Drehzahlmesseinrichtung 15 mit der Steuereinrichtung 14 verbunden ist, sodass die Regelung des Vorschubes der Austragseinrichtung 5 in Abhängigkeit der Torsion und der Drehzahl des Antriebselementes 8 erfolgen kann. Die Drehzahlmesseinrichtung 15 weist einen geeigneten Sensor 15a auf, der mit einem mit dem Antriebselement 8 umlaufenden Gegenstück 15b zur Erfassung der Drehzahl zusammenwirkt.

Im Rahmen der Erfindung ist es aber auch denkbar, dass die Erfassung der Drehzahl mit einem der Sensoren 13a, 13b durchgeführt wird, sodass für die Ermittlung der Drehzahl kein zusätzlicher Sensor erforderlich ist.

Wird neben der Torsion auch die Drehzahl des Antriebselementes 8 ermittelt, kann eine übersetzungsunabhängige Regelung des Vorschubes der Austragseinrichtung 5 realisiert werden.

**Patentansprüche**

**1.** Fahrzeug mit

a. einem Laderaum (3) zum Aufnehmen von Ladegut (4),
b. einer im Laderaum angeordneten Austragseinrichtung (5) zum Fördern des Ladeguts zu einer Austragsöffnung (6), wobei Mittel vorgesehen sind, um den Vorschub der Austragseinrichtung zu regeln,
c. einer im Bereich der Austragsöffnung (6) angeordneten Verteilereinrichtung (7) zum flächigen Verteilen des Ladeguts, wobei die Verteilereinrichtung über ein Antriebselement (8) angetrieben wird, und
d. eine Steuereinrichtung zur Regelung des Vorschubs der Austragseinrichtung in Abhängigkeit des Antriebselements,
**dadurch gekennzeichnet, dass** eine elektronische Torsionsmesseinrichtung (14) zur Erfassung der Torsion des Antriebselements (8) und eine Drehzahlmesseinrichtung (15) zur Ermittlung der Drehzahl des Antriebselements (8) vorgesehen sind und die Steuereinrichtung (14) zur Regelung des Vorschubs der Austragseinrichtung (5) in Abhängigkeit der Torsion und der Drehzahl des Antriebselements (8) ausgelegt ist.

2. Fahrzeug nach Anspruch 1, **dadurch gekennzeichnet, dass** die Torsionsmesseinrichtung (14) wenigstens einen elektronischen, berührungsfreien Sensor (13a, 13b) aufweist.

3. Fahrzeug nach Anspruch 1, **dadurch gekennzeichnet, dass** die Torsionsmesseinrichtung (14) wenigstens einen magnetischen Sensor aufweist.

4. Fahrzeug nach Anspruch 1, **dadurch gekennzeichnet, dass** die Torsionsmesseinrichtung (14) wenigstens einen Lichtsensor aufweist.

5. Fahrzeug nach Anspruch 1, **dadurch gekennzeichnet, dass** die Drehzahl des Antriebselements (8) veränderbar ist.

6. Fahrzeug nach Anspruch 1, **dadurch gekennzeichnet, dass** die Torsionsmesseinrichtung (14) gleichzeitig zur Erfassung der Drehzahl ausgebildet ist.

7. Fahrzeug nach Anspruch 1, **dadurch gekennzeichnet, dass** es sich bei der Austragseinrichtung (5) um eine Schiebewand handelt.

8. Fahrzeug nach Anspruch 1, **dadurch gekennzeichnet, dass** es sich bei der Austragseinrichtung (5) um einen Kratzboden handelt.

9. Fahrzeug nach Anspruch 1, **dadurch gekennzeichnet, dass** die Verteilereinrichtung (7) Streuwalzen aufweist.

10. Fahrzeug nach Anspruch 1, **dadurch gekennzeichnet, dass** es sich bei der Verteilereinrichtung (7) um Fräswalzen handelt.

11. Fahrzeug nach Anspruch 1, **dadurch gekennzeichnet, dass** die Verteilereinrichtung (7) einen Streuteller aufweist.

12. Fahrzeug nach Anspruch 1, **dadurch gekennzeichnet, dass** das Mittel zur Regelung des Vorschubs der Austragseinrichtung durch ein Hydraulikventil (12) gebildet wird.

13. Fahrzeug nach Anspruch 1, **dadurch gekennzeichnet, dass** es sich bei dem Fahrzeug um einen landwirtschaftlichen Anhänger (1) handelt.

## Claims

1. A vehicle comprising

a. a holding area (3) for receiving cargo (4),
b. a discharge device (5) arranged in the holding area for conveying the cargo to a discharge opening (6), wherein means are provided for regulating the feed rate of the discharge device,
c. a distribution device (7) arranged in the region of the discharge opening (6) and provided for laminar distribution of the cargo, wherein the distribution device is driven by a drive element (8), and
d. a control device for regulating the feed rate of the discharge device on the basis of the drive element,
**characterised in that** an electronic torsion measuring device (14) for detecting the torsion of the drive element (8) and a revolution counter (15) for determining the speed of rotation of the drive element (8) are provided, and the control device (14) for regulating the feed rate of the discharge device (5) is configured according to the torsion and the speed of rotation of the drive element (8).

2. A vehicle according to claim 1, **characterised in that** the torsion measuring device (14) comprises at least one electronic, contactless sensor (13a, 13b).

3. A vehicle according to claim 1, **characterised in that** the torsion measuring device (14) comprises at least one magnetic sensor.

4. A vehicle according to claim 1, **characterised in that** the torsion measuring device (14) comprises at least one light sensor.

5. A vehicle according to claim 1, **characterised in that** the speed of rotation of the drive element (8) is alterable.

6. A vehicle according to claim 1, **characterised in that** the torsion measuring device (14) is designed for simultaneous detection of the speed of rotation.

7. A vehicle according to claim 1, **characterised in that** the discharge device (5) is a sliding panel.

8. A vehicle according to claim 1, **characterised in that** the discharge device (5) is a scraper floor.

9. A vehicle according to claim 1, **characterised in that** the distribution device (7) comprises scattering rollers.

10. A vehicle according to claim 1, **characterised in that** the distribution device (7) comprises milling rollers.

11. A vehicle according to claim 1, **characterised in**

**that** the distribution device (7) comprises a spreading plate.

12. A vehicle according to claim 1, **characterised in that** the means for regulating the feed rate of the discharge device is formed by a hydraulic valve (12).

13. A vehicle according to claim 1, **characterised in that** the vehicle is an agricultural trailer (1).

**Revendications**

1. Véhicule avec

   a. un espace de chargement (3), destiné à recevoir les produits de chargement (4),
   b. un dispositif de déchargement (5), disposé dans l'espace de chargement, pour conduire les produits de chargement vers une ouverture de déchargement (6), sachant que des moyens sont prévus pour réguler l'avance du dispositif de déchargement,
   c. un dispositif de répartition (7), qui est disposé dans la région de l'ouverture de déchargement (6) pour la répartition en surface des produits de chargement, sachant que le dispositif de répartition est entraîné par un élément d'entraînement (8), et
   d. un dispositif de commande pour la régulation de l'avance du dispositif de déchargement en dépendance de l'élément d'entraînement, **caractérisé en ce que** sont prévus un système électronique de mesure de torsion (14), pour la détection de le torsion de l'élément d'entraînement (8), et un système de mesure de la vitesse de rotation (15), pour la détection de la vitesse de rotation de l'élément d'entraînement (8), et que le dispositif de commande (14) est conçu pour la régulation de l'avance du dispositif de déchargement (5) en fonction de la torsion et de la vitesse de rotation de l'élément d'entraînement (8).

2. Véhicule selon la revendication 1, **caractérisé en ce que** le système de mesure de torsion (14) est doté d'au moins un détecteur sans contact (13a, 13b).

3. Véhicule selon la revendication 1 **caractérisé en ce que** le système de mesure de torsion (14) est doté d'au moins un détecteur magnétique.

4. Véhicule selon la revendication 1, **caractérisé en ce que** le système de mesure de torsion (14) est doté d'au moins un capteur de lumière.

5. Véhicule selon la revendication 1, **caractérisé en ce que** la vitesse de rotation de l'élément d'entraînement (8) est variable.

6. Véhicule selon la revendication 1, **caractérisé en ce que** le dispositif de mesure de torsion (14) est conçu simultanément pour la détection de la vitesse de rotation.

7. Véhicule selon la revendication 1, **caractérisé en ce que** le dispositif de déchargement (5) consiste en une paroi coulissante.

8. Véhicule selon la revendication 1, **caractérisé en ce que** le du dispositif de déchargement (5) consiste en un fond à raclettes.

9. Véhicule selon la revendication 1, **caractérisé en ce que** le dispositif de répartition (7) est doté de cylindres d'épandage.

10. Véhicule selon la revendication 1, **caractérisé en ce que** le dispositif de répartition (7) consiste en des fraises oscillantes.

11. Véhicule selon la revendication 1, **caractérisé en ce que** le dispositif de répartition (7) est doté d'un plateau d'épandage.

12. Véhicule selon la revendication 1, **caractérisé en ce que** le moyen de régulation de l'avance du dispositif de déchargement est formé par une soupape hydraulique (12).

13. Véhicule selon la revendication 1, **caractérisé en ce que** ledit véhicule consiste en une remorque agricole (1).

EP 2 179 637 B1

6

4

3

5

6

7

2

9

10

8

15b

13c

13d

13a

13

13b

15a

15

11

12

14

**EP 2 179 637 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3912848 A1